# EUROPÄISCHE PATENTSCHRIFT

(11) **EP 4 341 153 B1**
(45) Veröffentlichungstag und Bekanntmachung des Hinweises auf die Patenterteilung: **25.03.2026**
(21) Anmeldenummer: 22720912.9
(22) Anmeldetag: 26.04.2022
(51) Int. Cl.: B62K 25/28, F16F 1/26

(54) **EINSPURIGES FAHRZEUG**
SINGLE-TRACK VEHICLE
VÉHICULE À VOIE UNIQUE

(30) Priorität: 17.05.2021 AT 503802021
(43) Veröffentlichungstag der Anmeldung: 27.03.2024
(73) Patentinhaber: KTM AG, 5230 Mattighofen (AT)
(72) Erfinder: GUSTAFSON, Torbjörn, 5165 Berndorf bei Salzburg (AT); FELLNER, Hannes, 4871 Zipf (AT)
(74) Vertreter: Torggler & Hofmann Patentanwälte - Innsbruck
(86) Internationale Anmeldenummer: PCT/AT2022/060130
(87) Internationale Veröffentlichungsnummer: WO 2022/241490

(56) Entgegenhaltungen:
- EP-A1- 0 394 438
- JP-B2- 3 198 464
- US-A- 1 168 702
- US-A- 5 816 356

## Beschreibung

Die vorliegende Erfindung betrifft ein einspuriges Fahrzeug, insbesondere Motorrad, mit den Merkmalen des Oberbegriffs des Anspruchs 1.

Gattungsgemäße einspurige Fahrzeuge beinhalten
- einen Rahmen,
- eine relativ zum Rahmen rotierbare Schwinge sowie
- eine Blattfeder, welche zum Erzielen einer Federwirkung zwischen der Schwinge und dem Rahmen mit dem Rahmen einerseits und der Schwinge andererseits verbunden ist,wobei
- die Blattfeder über einen ersten Hebel und ein erstes Drehlager mit dem Rahmen verbunden ist, sodass eine erste Drehachse des ersten Drehlagers aufgrund des ersten Hebels zur Blattfeder quer versetzt ist, und/oder 1
- die Blattfeder über einen zweiten Hebel und ein zweites Drehlager mit der Schwinge verbunden ist, sodass eine zweite Drehachse des zweiten Drehlagers aufgrund des zweiten Hebels zur Blattfeder quer versetzt ist.

Blattfedern sind für die Federung bei Motorrädern seit Langem bekannt. Tatsächlich dürfte die Blattfeder ursprünglich weiter verbreitet gewesen sein als die heute gängige Spiralfeder. Da sich größere Federwege mit Spiralfedern leichter verwirklichen ließen als mit Blattfedern, hat sich zwischenzeitlich die Spiralfeder durchgesetzt. Trotzdem wurde auch versucht, Blattfederkonzepte bei modernen Motorrädern umzusetzen. Dies geschah auch teilweise mit Erfolg. Tatsächlich konnten Maschinen mit Blattfederkonzept in den 90er Jahren Rennen der Motocross-Weltmeisterschaft gewinnen.

Stand der Technik ist beispielsweise aus der EP 0725004 B1, der JP 6122453 B2, der JP07149275 A, der JP H05330476 A, der JP H05178264 A, der DE 102012101551 B4 oder EP 0 394 438 A1 bekannt.

Gattungsgemässe Motorräder sind aus der JP 3198464 B2, der US 5816356 A und der US 1168702 A bekannt.

Obwohl Blattfedern grundsätzlich Vorteile gegenüber gängigen Spiralfedern haben sollten (beispielsweise hinsichtlich des Gewichts), konnten sich Blattfederkonzepte in der Serie nicht durchsetzen, wofür folgende Gründe zu nennen sind:
- Großteils benötigen die Blattfedern des Standes der Technik einen sehr großen Bauraum, und zwar an ungünstigen Stellen am Motorrad (schlechtes "Packaging"). Dies beruht zumeist darauf, dass die Blattfeder als 3-Punkt-Biegebalken verwendet wird, somit müssen zumindest drei voneinander beabstandete Anknüpfungspunkte zum Motorrad vorhanden sein
- Aus ähnlichen Gründen werden theoretisch erreichbare Gewichtsreduktionen durch Blattfedern im Vergleich zu gängigen Spiralfedern nicht erreicht und tatsächlich umgekehrt.
- Die Konstruktionen des Standes der Technik beinhalten im Vergleich zu gängigen Spiralfedern viele verschiedene Bauteile und sind daher vergleichsweise komplex.
- Die Blattfedern des Standes der Technik sind oft so angeordnet, dass sie die Bodenfreiheit des Motorrads verringern, was im Offroad-Bereich besonders unerwünscht ist.
- Die bekannten Blattfedern sind an exponierten Stellen, beispielsweise unterhalb des Motors oder parallel zur Schwinge, angeordnet, sodass Steinschläge, Bodenkontakt und dergleichen für eine kurze Lebensdauer sorgen (Delamination der Blattfeder).
- Die schon erwähnte Verwendung als 3-Punkt-Biegebalken in Verbindung mit einem Anlagekörper (siehe insbesondere EP 0725004 B1) hat zur Folge, dass Fremdkörper leicht zwischen den Anlagekörper und die Blattfeder geraten können. Auch dies kann zur Delamination der Blattfeder und damit zu einer kurzen Lebensdauer führen.
- Einschränkungen bei der geometrischen Anordnung der Blattfeder führen dazu, dass gewünschte Konstruktionsziele, beispielsweise eine verbesserte Progressivität der Federkraft, nicht erreicht werden können (oder dass dafür wieder zusätzliche Bauteile eingesetzt werden müssen, die Gewicht, Komplexität und

Bauraum der Konstruktion negativ beeinflussen). Aufgabe der Erfindung ist es, ein Blattfederkonzept für ein einspuriges Fahrzeug bereitzustellen, das die oben erwähnten Nachteile zumindest so weit vermeidet, dass es in einem Serien-Fahrzeug einsetzbar ist.

Diese Aufgabe wird durch ein einspuriges Fahrzeug mit den Merkmalen des Anspruchs 1 gelöst, nämlich indem
- die Blattfeder über einen ersten Hebel und ein erstes Drehlager mit dem Rahmen verbunden ist, sodass eine erste Drehachse des ersten Drehlagers aufgrund des ersten Hebels zur Blattfeder quer versetzt ist, und
- die Blattfeder über einen zweiten Hebel und ein zweites Drehlager mit der Schwinge verbunden ist, sodass eine zweite Drehachse des zweiten Drehlagers aufgrund des zweiten Hebels zur Blattfeder quer versetzt ist, und
- die Blattfeder ausschließlich über zwei Verbindungen, dem ersten Hebel und dem zweiten Hebel, mit dem Rest des Motorrads in Kontakt steht.

Ein grundsätzlicher Aspekt der Erfindung ist es, dass durch räumliche Trennung des Punktes, an dem die Blattfeder am Rahmen oder an der Schwinge befestigt ist, und desjenigen Punktes, an dem die Blattfeder tatsächlich ihre Wirkung entfaltet (d.h. gemäß der Erfindung am Blattfeder-seitigen Ende des ersten und/oder zweiten Hebels), zumindest ein zusätzlicher Freiheitsgrad (Drehung in Verbindung mit der Beabstandung) erzeugt wird, was sowohl Auswirkungen auf den Bauraum als auch auf die Kinematik der Federung hat. Insbesondere erlauben zur Blattfeder quer versetzte Drehlager die Progression der Federung - d.h. die Erhöhung der Federkraft in Abhängigkeit vom Einfederhub - über einen weiten Bereich zielgerichtet und genau vorzugeben. Das gilt insbesondere, aber nicht nur, wenn eine sehr starke Progression gewünscht ist. Durch den zusätzlichen Freiheitsgrad, den die Erfindung beim Entwerfen der Federung zur Verfügung stellt, lassen sich nämlich beispielsweise auch lineare oder degressive Federungen leicht realisieren.

Erfindungsgemäß kann auf eine Einspannung eines größeren Abschnitts der Blattfeder am Rahmen, wie dies im Stand der Technik gelehrt wird (wohl um die gewünschte Progressivität der Federkraft zu erreichen), schlicht und einfach verzichtet werden.

Erfindungsgemäß wird dadurch der Bauraum für die Blattfeder so gering wie möglich gehalten. Überraschend ist, dass dies gleichzeitig ermöglicht, die Federkinematik, insbesondere die Progressivität der Federkraft, wie gewünscht zu gestalten (weil die Verformung der Blattfeder nicht mehr eins zu eins an die Relativbewegung zwischen Rahmen und Schwinge geknüpft ist).

Erfindungsgemäß steht die Blattfeder ausschließlich über zwei Verbindungen, dem ersten Hebel und dem zweiten Hebel, mit dem Rest des Motorrads in Kontakt.

Wie bereits erwähnt, müssen Blattfedern gemäß der Erfindung nicht mehr als 3-Punkt-Biegebalken verwendet werden, um gewünschte Federkinematiken, insbesondere mit einer akzeptablen oder verbesserten Progression der Federkraft, zu realisieren.

Weitere Vorteile der Erfindung sind, dass
- die Federung mit kleinem Bauraum (schon allein, weil nur zwei Anbindungspunkte am Rahmen und an der Schwinge notwendig sind) ausgeführt werden kann und an gewünschten Stellen am Motorrad angeordnet werden kann, beispielsweise an geschützten Stellen, wobei die Bodenfreiheit nicht beeinträchtigt wird,
- ein geringeres Gewicht erreicht werden kann,
- einfache Konstruktionen realisiert werden können, insbesondere wenig verschiedene Teile verwendet werden müssen,
- langlebige Konstruktionen realisiert werden können, weil keine zusätzlichen Bauteile verwendet werden müssen, welche die Blattfeder beispielsweise zum Modifizieren der Progression der Federkraft kontaktieren, und weil die Blattfeder im Vergleich zum Stand der Technik gleichmäßiger belastet wird.

Im Vergleich zu gängigen Spiralfedern verfügen Blattfedern, insbesondere in faserverstärkter Kunststoffbauweise, über eine erhöhte intrinsische Dämpfung, was erwartungsgemäß zu einer Verbesserung der Fahreigenschaften von Serienmotorrädern führt. Durch eine geometrische Entkopplung können bei der Erfindung im Vergleich zu gängigen Spiralfedern außerdem die Dämpfung und die Federung weitgehend unabhängig voneinander eingestellt werden.

Im Sinne der Erfindung werden Gleit- und/oder Wälzlager als erstes Drehlager und/oder zweites Drehlager aufgefasst.

Besonders bevorzugt können Ausführungsformen der Erfindung sein, wobei die Blattfeder sowohl versetzt zur (ersten) Drehachse am Rahmen als auch versetzt zur (zweiten) Drehachse an der Schwinge gelagert werden kann. Die Blattfeder ist gemäß solchen Ausführungen dann in gewissem Sinn schwebend am Motorrad angeordnet und bietet das maximale Potenzial für die Anpassung der Blattfeder an den Bauraum und die Kinematik der Federung.

Vorzugsweise kann genau eine Blattfeder zum Einsatz kommen, um Gewicht und Bauraum so weit wie möglich zu reduzieren. Grundsätzlich sind aber auch Ausführungen denkbar, wobei zwei oder mehr Blattfedern erfindungsgemäß eingesetzt werden.

Darunter, dass die Blattfeder zur ersten Drehachse und zur zweiten Drehachse quer versetzt ist, kann verstanden werden, dass die erste und zweite Drehachse jeweils einen Abstand zu einer (gegebenenfalls gedachten über die Blattfeder hinaus fortgesetzten) Ebene der Blattfeder aufweisen.

Bei der ersten Drehachse und der zweiten Drehachse kann es sich jeweils um eine gedachte Rotationsachse oder eine physische Achse des ersten Drehlagers oder des zweiten Drehlagers handeln.

Die Erfindung kann besonders bevorzugt bei einer Hinterradfederung zum Einsatz kommen. Der Einsatz bei einer Vorderradfederung ist aber zumindest theoretisch denkbar.

Die Erfindung kann bei allen Arten von Motorrädern zum Einsatz kommen. Unter Motorrädern werden alle einspurigen Fahrzeuge verstanden, die einen Antriebsmotor zum selbstständigen Vortrieb aufweisen. Besonders bevorzugt, kann die Erfindung bei geländegängigen Motorrädern (Enduro, Motocross) zum Einsatz kommen. Prinzipiell denkbar ist der Einsatz der Erfindung auch bei Fahrrädern, wobei einspurige Fahrzeuge mit einem Hilfsmotor (d.h. nicht zum selbstständigen Vortrieb, sondern zur Unterstützung, wie zum Beispiel bei einem E-Bike) auch als Fahrräder bezeichnet werden.

Schutz begehrt wird außerdem für die Verwendung einer Blattfeder bei einem erfindungsgemäßen einspurigen Fahrzeug.

Bevorzugte Ausführungsformen der Erfindung sind in den abhängigen Ansprüchen definiert.

Bevorzugt kann das erste Drehlager unmittelbar am Rahmen angeordnet sein und/oder das zweite Drehlager unmittelbar an der Schwinge angeordnet sein. Grundsätzlich können die Drehlager aber auch anders positioniert werden. Beispielsweise könnte das erste Drehlager auch am Motor oder einem Batteriekasten angeordnet und befestigt sein, wenn dies aus kinematischer Sicht vorteilhaft erscheint. Aus demselben Grund kann/können das erste Drehlager und/oder das zweite Drehlager an wie auch immer gearteten Fortsätzen, wie beispielsweise montierte Hebel oder dergleichen, des Rahmens oder der Schwinge angeordnet sein.

Darunter, dass die Blattfeder über einen ersten Hebel und ein erstes Drehlager mit dem Rahmen verbunden ist, kann also verstanden werden, dass das Drehlager über eine wie auch immer geartete tragenden Struktur in Bezug auf den Rahmen des einspurigen Fahrzeugs lagefest verbunden ist.

Der erste Hebel kann mit der Blattfeder einen rechten oder spitzen Winkel einschließen und/oder der zweite Hebel kann mit der Blattfeder einen rechten oder spitzen Winkel einschließen.

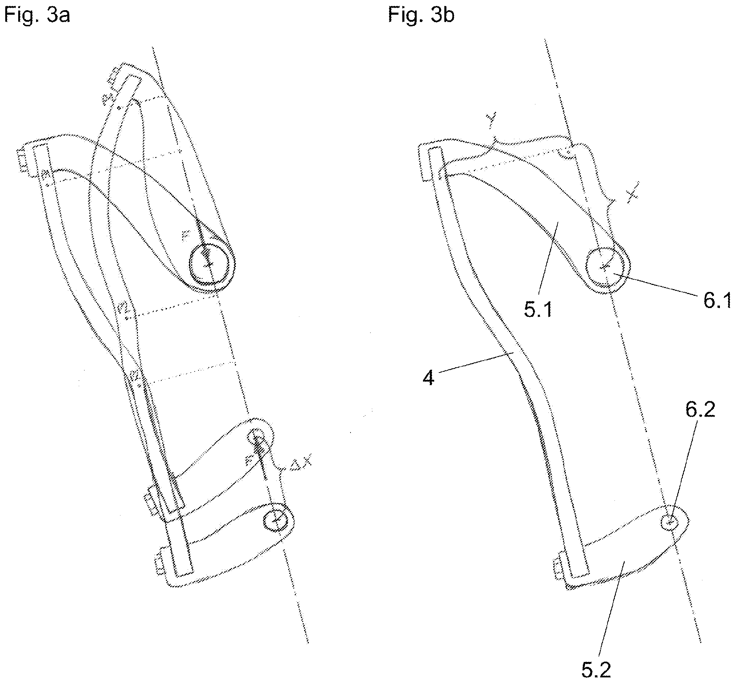

Parallel zu einer Verbindungslinie des ersten Drehlagers und des zweiten Drehlagers gemessen können der erste Hebel und der zweite Hebel gemeinsam (siehe dazu Fig. 3a und 3b) eine Länge zwischen 1 cm und 20 cm, bevorzugt zwischen 2 cm und 15 und besonders bevorzugt zwischen 5 cm und 10 cm, aufweisen.

Der erste Hebel und/oder der zweite Hebel können bevorzugt eine Erstreckung parallel zur Verbindungslinie des ersten Drehlagers und des zweiten Drehlagers aufweisen, die zum jeweils anderen Hebel hin gerichtet ist, was für ein progressives Federverhalten sorgen kann

Ist eher ein lineares Federverhalten gewünscht, können der erste Hebel und der zweite Hebel gemeinsam gemessen parallel zu einer Verbindungslinie des ersten Drehlagers und des zweiten Drehlagers auch eine Länge von etwa 0 aufweisen.

Für ein eher degressives Federverhalten können der erste Hebel und/oder der zweite Hebel auch eine Erstreckung parallel zur Verbindungslinie des ersten Drehlagers und des zweiten Drehlagers aufweisen, die vom jeweils anderen Hebel weg gerichtet ist,

Senkrecht zur Verbindungslinie des ersten Drehlagers und des zweiten Drehlagers gemessen können der erste Hebel und der zweite Hebel gemeinsam (siehe dazu Fig. 3a und 3b) eine Länge zwischen 5 cm und 30 cm, bevorzugt zwischen 8 cm und 20 und besonders bevorzugt zwischen 10 cm und 18 cm, aufweisen.

Bevorzugt kann der erste Hebel und/oder der zweite Hebel zum Einstellen einer Federvorspannung und/oder einer Federhärte der Blattfeder in der Länge verstellbar sein. Dies kann beispielsweise über ein Gewinde erfolgen.

Die Blattfeder kann als flacher Körper mit einem ersten Ende und einem zweiten Ende ausgebildet sein, wobei die Blattfeder vorzugsweise so angeordnet ist, dass sich das erste Ende und das zweite Ende der Blattfeder beim Einfedern in Bezug auf die Fahrtrichtung nach hinten biegen.

Das erste Ende der Blattfeder kann im ersten Hebel lagefest eingespannt sein und/oder das zweite Ende der Blattfeder kann im zweiten Hebel lagefest eingespannt sein. Dadurch lässt sich während des Einfedervorgangs eine verstärkte Biegung der Blattfeder induzieren, was die Progression der Federkraft unterstützen kann. Die Art der Befestigung der Blattfeder am ersten Hebel und/oder am zweiten Hebel ist also eine weitere Möglichkeit**,** die Federcharakteristik zu beeinflussen.

Die Blattfeder kann eine erste Krümmung und/oder eine zweite Krümmung aufweisen.

Durch die erste Krümmung und durch die zweite Krümmung kann eine S-Form entstehen, wobei die zweite Krümmung vorzugsweise stärker ausgeprägt ist als die erste Krümmung.

Durch die erste Krümmung und/oder die zweite Krümmung kann einerseits die Federkraft wie gewünscht eingestellt werden. Andererseits können die Krümmungen dazu verwendet werden, dass sich die Blattfeder so platzsparend wie möglich in das Motorrad einfügt (optimiertes Packaging).

Es ist darauf hinzuweisen, dass die erwähnte S-Form nur im entlasteten Zustand vorliegen kann und in einem eingefederten Zustand aufgelöst sein kann.

Die erste Krümmung kann mit einer konkaven Seite in Fahrtrichtung nach hinten weisen.

Die zweite Krümmung kann mit einer konkaven Seite in Fahrtrichtung nach vorne weisen.

Die erste Krümmung kann oberhalb der zweiten Krümmung angeordnet sein.

Besonders bevorzugt kann die Blattfeder als faserverstärkter Kunststoff, insbesondere glasfaserverstärkter Kunststoff (GFK), hergestellt sein, wobei zur Herstellung der Blattfeder eine Vielzahl an gestapelten Faserverstärkungslagen unterschiedlicher Länge mit dem Kunststoff oder Vorläufern des Kunststoffs geflutet werden.

Diesbezüglich kann unabhängig voneinander Folgendes erwähnt werden:
- Bei dem Kunststoff kann es sich um ein thermoplastisches Polymer und/oder ein Kunstharz handeln.
- Unter Fluten der Faserverstärkungslagen wird jegliches Kontaktieren / Einbringen des Kunststoffs oder der Vorläufer des Kunststoffs verstanden (bspw. mittels Autoklaven oder Formwerkzeugen), sodass die Faserverstärkungslagen in den Kunststoff als Matrix eingebettet werden, sodass ein Kunststoffkörper entsteht, der durch die Faserverstärkungslagen verbesserte mechanische Eigenschaften aufweist.
- Die Vorläufer des Kunststoffs / Kunstharzes können dabei chemisch zum Kunststoff / Kunstharz ausreagieren und/oder der thermoplastische Kunststoff kann durch Abkühlen in den festen (d.h. nicht plastischen) Phasenzustand übergehen.
- Die Faserverstärkungslagen können bevorzugt sogenannte endlose Faserverstärkungslagen sein.
- Die Faserverstärkungslagen können beispielsweise in Form von vorgefertigten Tapes oder Organoblechen vorliegen oder können direkt drapiert werden.

Es können sich in Bezug auf die Längsachse der Blattfeder folgende Bereiche ergeben:
- ein erster Bereich konstanter Dicke der Blattfeder,
- ein sich an den ersten Bereich anschließenden zweiten Bereich veränderlicher Dicke der Blattfeder und
- ein sich an den zweiten Bereich anschließenden dritten Bereich konstanter Dicke der Blattfeder.

Es wurde schon erwähnt, dass sich durch die Erfindung eine relativ homogene Belastung der Blattfeder erzielen lässt, sodass sich der erste Bereich über einen relativ großen Bereich der Blattfeder erstrecken kann.

Bevorzugt kann es vorgesehen sein, dass ein Bereich konstanter Dicke, insbesondere der erste Bereich und/oder der zweite Bereich, mehr als 30 %, bevorzugt mehr als 40 % und besonders bevorzugt mehr als 50 %, der Fläche der Blattfeder ausmacht.

Im zweiten Bereich verändert sich die Dicke der Blattfeder bevorzugt so, dass die Dicke zum ersten Enden der Blattfeder hin abnimmt.

Der dritte Bereich kann verwendet werden, um die Blattfeder am ersten Hebel lagefest einzuspannen.

Zu bemerken ist, dass auch Ausführungsformen der Erfindung bevorzugt sein können, wobei die Blattfeder aus Metall gefertigt ist, insbesondere dann, wenn die Blattfeder flach oder annähernd flach ausgebildet ist (d.h. keine erste oder zweite Krümmung) und/oder mit konstanter Dicke ausgebildet ist. Fertigungstechnisch können sich auf diese Weise nämlich besonders einfache Ausführungsformen der Erfindung realisieren lassen.

Die bevorzugten Ausführungen in Bezug auf die Blattfeder können selbstverständlich auch für die erfindungsgemäße Verwendung der Blattfeder herangezogen werden.

Das erste Drehlager und das zweite Drehlager können im Wesentlichen übereinander angeordnet sein.

Eine Verbindung der Blattfeder mit der Schwinge, insbesondere das zweite Drehlager, kann zwischen einem Hauptdrehgelenk, welches die Schwinge mit dem Rahmen verbindet, und einer Radachse angeordnet sein, wobei die Verbindung der Blattfeder mit der Schwinge vorzugsweise näher am Hauptdrehgelenk als an der Radachse angeordnet ist.

Bezogen auf die Schwingenlänge, d.h**.** den Abstand zwischen dem Hauptdrehgelenk und der Radachse, kann die Verbindung der Blattfeder mit der Schwinge weniger als 50 % der Schwingenlänge, bevorzugt weniger als 40 % der Schwingenlänge, besonders bevorzugt weniger als 36 % der Schwingenlänge und ganz besonders bevorzugt weniger als 30 % der Schwingenlänge, vom Hauptdrehgelenk entfernt angeordnet sein.

In besonders bevorzugten Ausführungsbeispielen kann die Verbindung der Blattfeder mit der Schwinge mehr als 20 % der Schwingenlänge vom Hauptdrehgelenk entfernt angeordnet sein, insbesondere etwa 23 % der Schwingenlänge vom Hauptdrehgelenk entfernt angeordnet sein.

Die Verbindung der Blattfeder mit der Schwinge kann einen Abstand von mehr als 10 % der Schwingenlänge vom Hauptdrehgelenk haben.

Die Radachse ist, wie erwähnt, bevorzugt die Hinterradachse.

Weitere Vorteile und Einzelheiten der Erfindung ergeben sich aus den Figuren sowie der dazugehörigen Figurenbeschreibung. Dabei zeigen:
- Fig. 1: eine Ausführungsform eines erfindungsgemäßen Motorrads,
- Fig. 2a und 2b: die Blattfeder aus dem Ausführungsbeispiel nach Fig. 1 in einem ausgefederten und einem eingefederten Zustand,
- Fig. 3a und 3b: die Blattfeder aus dem Ausführungsbeispiel nach Fig. 1 in einem ausgefederten und einem eingefederten Zustand,
- Fig. 4: ein weiteres Ausführungsbeispiel einer Blattfeder für ein erfindungsgemäßes Motorrad,
- Fig. 5: die Federkraft aufgetragen gegen den Federweg für das Ausführungsbeispiel nach Fig. 1,
- Fig. 6a und 6b: Simulationsergebnisse von Spannungsverhältnissen in der Blattfeder gemäß dem Ausführungsbeispiel nach Fig. 1,
- Fig. 7a bis 7d: weitere Ausführungsbeispiele von Blattfedern für ein erfindungsgemäßes Motorrad,
- Fig. 8a bis 8d: weitere Ausführungsbeispiele von Blattfedern für ein erfindungsgemäßes Motorrad sowie
- Fig. 9a bis 9c: weitere Ausführungsbeispiele von Blattfedern für ein erfindungsgemäßes Motorrad.

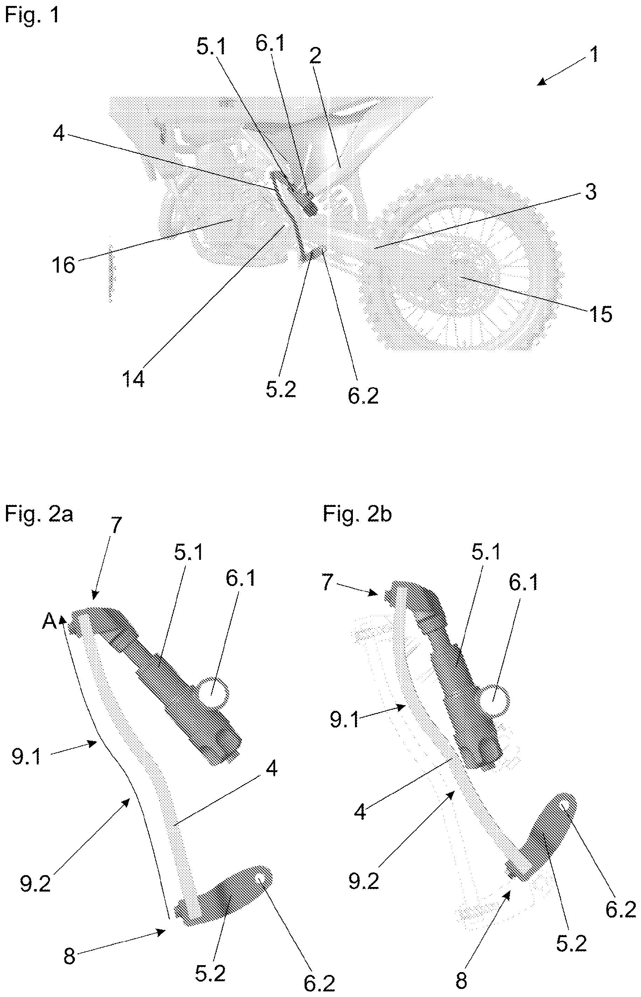

Fig. 1 zeigt ein erfindungsgemäßes Motorrad 1 (in diesem Ausführungsbeispiel eine Motocross-Maschine) mit einem Rahmen 2 und einer Schwinge 3, welche eine Radachse 15 (Hinterradachse) lagert. Die Schwinge 3 ist über das Hauptdrehgelenk 14 mit dem Rahmen 2 verbunden.

Als Federung ist erfindungsgemäß eine Blattfeder 4 vorgesehen, die über einen ersten Hebel 5.1 und ein erstes Drehlager 6.1 am Rahmen 2 sowie über einen zweiten Hebel 5.2 und ein zweites Drehlager 6.2 an der Schwinge gelagert ist.

Es ist sofort zu erkennen, dass die Anordnung der Blattfeder 4 im Vergleich zum Stand der Technik sehr viel platzsparender ist und dass die Blattfeder 4 an einer besonders gut geschützten Stelle hinter dem Motor 16 angeordnet ist. Gleichzeitig ist die Blattfeder 4 sehr nahe am Motor 16 und nimmt nur minimal Platz in Anspruch.

Zu erwähnen ist, dass die Blattfeder 4 die in Fig. 1 ebenfalls noch erkennbare Spiralfeder ersetzt, Letztere also in der Realität nicht mehr vorhanden wäre.

Im vorliegenden Ausführungsbeispiel würde aber trotzdem noch das Dämpferelement vorhanden sein, das wie an sich im Stand der Technik ausgeführt sein kann.

Aus diesem Vergleich ergibt sich auch, wie wenig Bauraum die Blattfeder 4 gemäß der Erfindung benötigt. Es ist auch noch darauf zu verweisen, dass die Platzverhältnisse bei SerienMotorrädern im Bereich der Hinterradfederung besonders beengt sind, insbesondere wenn große Federwege zu realisieren sind. Der gemäß der Erfindung gewonnene Bauraum kann auf verschiedene Arten ausgenutzt werden. Beispielsweise können gewisse Komponenten des Motors 16 größer oder komplexer ausgeführt werden (bspw. Ansaugtrakt, Auspuffrohr, Airbox, Vorschalldämpfer) oder es können komplexere Konstruktionen mit mehr Bauteilen in Betracht gezogen werden. Beispielsweise könnte der Motor 16 durch einen Elektromotor ersetzt werden.

Durch die relativ kleine Bauweise der Blattfeder 4 wird außerdem Gewicht gespart. Zudem ist die Blattfeder 4 recht tief am Motorrad 1 angeordnet, sodass sich der Schwerpunkt vorteilhaft nach unten verschiebt, wobei die Bodenfreiheit aber nicht beeinträchtigt wird.

Gleichzeitig ist die Ausführung nach Fig. 1 einfach, d.h. nicht komplex, benötigt nur wenige Teile und ist besonders langlebig.

Im Ausführungsbeispiel nach Fig. 1 sind das erste Drehlager 6.1 und das zweite Drehlager 6.2 die einzigen Anknüpfungspunkte, worüber die Federanordnung mit dem Rest des Motorrads 1 in Kontakt steht (auch wenn prinzipiell noch ein Anlagekörper, bspw. etwa in Fig. 1 mittig in Bezug auf die Blattfeder 4 verwendet werden könnte, um eine noch stärkere Progression bei der Federkraft zu erreichen).

Deswegen und weil die Blattfeder 4, wie erwähnt, geschützt angeordnet ist, ist die Ausführungsform nach Fig. 1 besonders langlebig.

Fig. 2a und Fig. 2b zeigen, wie sich die Blattfeder 4 beim Einfedern verformt, wobei in Fig. 2b der höher belastete Zustand gezeichnet ist.

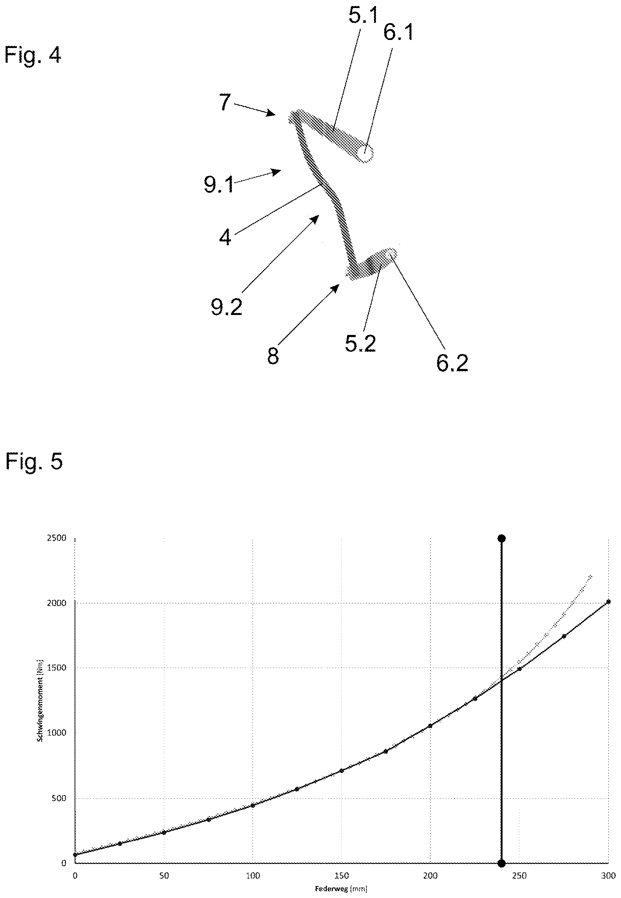

Es ist gut zu erkennen, dass mittels der rotierenden Hebel 5.1 und 5.2 eine relativ gleichmäßige Verformung und Belastung der Blattfeder 4 erreicht wird (siehe dazu auch Fig. 5a und 5b), was gleichzeitig dazu führt, dass die Blattfeder 4 insgesamt effektiv genutzt wird, wodurch sich eine gewünschte starke Progression der Federkraft erreichen lässt (siehe dazu Fig. 4). Es ist zu erkennen, dass während des Einfederns eine relativ stark ausgeprägte Rotation der Hebel, insbesondere des ersten Hebels 5.1 (um 23°), auftritt. Auch dies ist eine Voraussetzung für die gewünscht starke Progression der Federkraft.

Im vorliegenden Ausführungsbeispiel ist die Länge des ersten Hebels 5.1 über ein Gewinde einstellbar, um die Federvorspannung der Blattfeder 4 einstellen zu können.

Im vorliegenden Ausführungsbeispiel sind das erste Ende 7 im ersten Hebel 5.1 und das zweite Ende 8 im zweiten Hebel 5.2 lagefest (d.h. ohne eine Rotation relativ zum Hebel zu erlauben) eingespannt.

Die Blattfeder 4 verfügt über eine erste Krümmung 9.1 und eine zweite Krümmung 9.2, die zusammen eine S-Form der Blattfeder 4 erzeugen.

Die zweite Krümmung 9.2 stellt eine Gegenkrümmung dar, welche der Blattfeder 4 zusätzliche Federhärte verleiht und gleichzeitig Bauraum einspart.

Auch in den Figuren 3a und 3b ist die Blattfeder 4 in aus- und eingefederten Zuständen dargestellt. Um die Funktionsweise der Erfindung noch genauer darzustellen, ist die Blattfeder 4 hierfür im mitdrehenden Bezugssystem des ersten Drehgelenks 6.1 dargestellt, sodass die Verbindungslinie zwischen dem ersten Drehgelenk 6.1 und dem zweiten Drehgelenk 6.2 im ein- und ausgefederten Zustand zusammenfallen. Anders formuliert, wird die in Fig. 2a und 2b verdeutlichte Drehung dieser Verbindungslinie in Fig. 3a nicht dargestellt.

Der erste Hebel 5.1 kann durch zwei Parameter X und Y charakterisiert werden, welche den Abstand des Mittelpunkts der ersten Drehachse vom Punkt, an dem die Blattfeder 4 aus einer Klemmung am ersten Hebel 5.1 hervortritt, parallel beziehungsweise senkrecht zur Verbindungslinie der ersten und zweiten Drehachse messen (siehe Fig. 3b).

Im vorliegenden Ausführungsbeispiel beträgt X etwa 8 cm.

Im vorliegenden Ausführungsbeispiel beträgt Y etwa 10 cm.

In Fig. 3a sind der ein- und ausgefederte Zustand der Blattfeder 4 überlagert dargestellt. Außerdem sind die Punkte P1 und P2 an gleichen Stellen auf der Blattfeder 4 eingezeichnet, sodass die Bewegung und Verformung der Blattfeder 4 zwischen den beiden Zuständen einfach nachvollzogen werden kann.

Wie aus Fig. 3a zu erkennen ist, tritt unter dem Einfluss der Kraft F zunächst eine Verringerung des Abstands zwischen der ersten und zweiten Drehachse auf (□X). Zu erkennen ist nun, dass sich der Punkt P2 nur um eine relativ geringe Wegstrecke verschoben hat. Beim Punkt P1 tritt in X-Richtung ebenfalls nur eine relativ geringe Veränderung beim Einfedern auf. Die größte Veränderung tritt bei der Y-Komponente des Punktes P1 auf.

Dies zeigt intuitiv, warum ein erster Hebel 5.1 mit größerem X-Parameter eine stärkere Progression der Federkraft ergibt, weil sich der Punkt P1 beim Einfedern stärker verschiebt, je größer der X-Parameter des ersten Hebels 5.1 ist.

Analoges würde natürlich bei einer ähnlichen Betrachtung für den zweiten Hebel 5.2 gelten. Untersuchungen der Erfinder zeigen, dass die Summe der X-Werte und der Y-Werte der beiden Hebel charakteristisch für das progressive, lineare und/oder degressive Verhalten sein können.

Der Y-Wert für den zweiten Hebel beträgt im vorliegenden Ausführungsbeispiel etwa 7 cm.

Fig. 4 zeigt ein Ausführungsbeispiel der Blattfeder 4, welches recht ähnlich zum Ausführungsbeispiel gemäß Fig. 1 ist, wobei allerdings kein längenveränderlicher erster Hebel 5.1 vorhanden ist, sodass die Federvorspannung der Blattfeder 4 hier fix ist.

In Fig. 5 ist die Federkraft der Blattfeder 4 aus dem Ausführungsbeispiel gemäß Fig. 1 gegen den Federweg aufgetragen (dunklere ansteigende Kurve). Zu erkennen ist außerdem in hellgrau eine weitere Linie, die eine Progression der Federkraft zeigt, die beispielsweise bei modernen Motocross-Motorrädern gewünscht ist. Progression bedeutet in diesem Zusammenhang, dass die Federkraft beim Einfedern in den Federweg überproportional steigt, d.h. eine "Kurve nach oben" zu erkennen ist.

Die vertikale Linie im Diagramm aus Fig. 5 zeigt den maximalen Federweg des Motorrads 1 gemäß der Ausführung nach Fig. 1, der beispielsweise über einen Gummianschlag (wird auch als "Bumprubber" bezeichnet) realisiert wird.

Wie man sieht, stimmt die tatsächliche Kurve bis zum maximalen Federweg exzellent mit der gewünschten überein und zeigt erst bei größeren theoretischen Federwegen größere Abweichungen.

Kleinere Abweichungen gegen Ende des maximalen Federwegs könnten beispielsweise mit einem härteren, vergrößerten oder anderweitig modifizierten Bumprubber ausgeglichen werden.

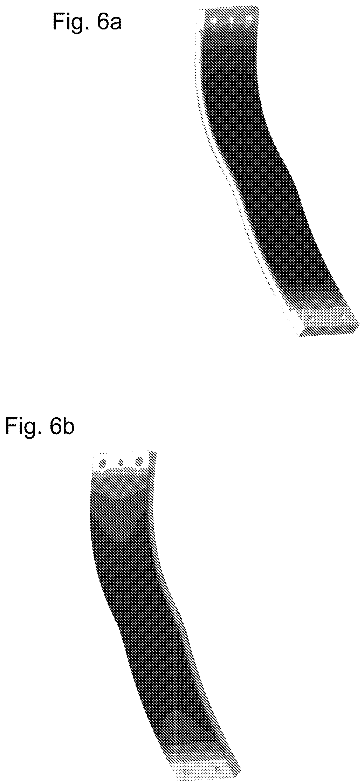

Bereits erwähnt wurde, dass die Federlänge gemäß der Erfindung deutlich kürzer ist als beim Stand der Technik. Dies hat damit zu tun, dass bei den 3-Punkt-Biegebalken-Konzepten das maximale Biegemoment immer an der mittleren Befestigung auftritt. An den äußeren beiden Befestigungspunkten wird dabei recht wenig Biegemoment erzeugt und die Blattfeder 4 wird daher über die Federlänge recht ungleichmäßig belastet. Diesem Problem kann mit der Federdicke und dem Lagenaufbau etwas entgegengewirkt werden, aber trotzdem bleiben hoch und niedrig belastete Bereiche. Gemäß der Erfindung wird die ganze Blattfeder 4 mit einem relativ gleichbleibenden Biegemoment belastet. Durch die gleichmäßige Belastung kann die auftretende Verformung sehr homogen auf die gesamte Federlänge verteilt werden. Zur Verdeutlichung sind in Fig. 6a und 6b (Fig. 6a: Innenseite, Fig. 6b: Außenseite, Innenseite zeigt in Fahrtrichtung nach hinten) unten die Randfaserdehnungen im komplett eingefederten Zustand dargestellt.

Wie bereits erwähnt, muss die Blattfeder 4 aber nicht in GFK-Bauweise hergestellt werden. In gewissen Ausführungsformen können beispielsweise auch Blattfedern 4 aus Metall verwendet werden, besonders wenn keine Krümmungen und/oder Blattfedern 4 mit konstanter Dicke vorgesehen sind.

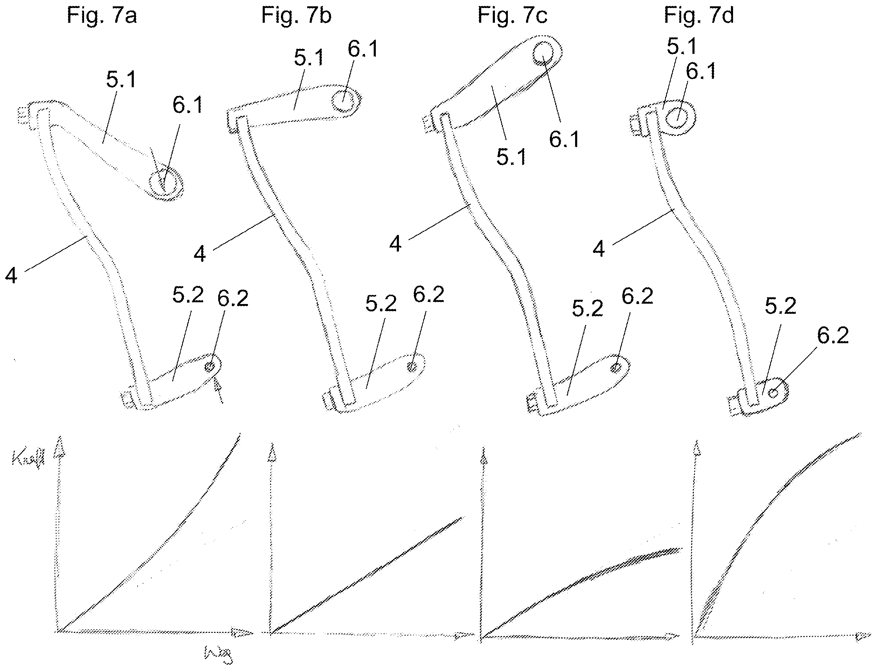

Fig. 7a bis 7d zeigen verschiedene Ausführungsformen von Blattfederanordnungen gemäß der Erfindung mit Blattfedern 4, ersten Hebeln 5.1 und zweiten Hebeln 5.2. Analog zu Fig. 4 ist dazu jeweils ein Diagramm mit der Federkraft über den Federweg dargestellt. Die Blattfeder 4 ist in den Fig. 7a bis 7d jeweils gleich ausgebildet, d.h. Fig. 7a bis 7b unterscheiden sich nur durch die Ausführungen der ersten Hebel 5.1 und der zweiten Hebel 5.2.

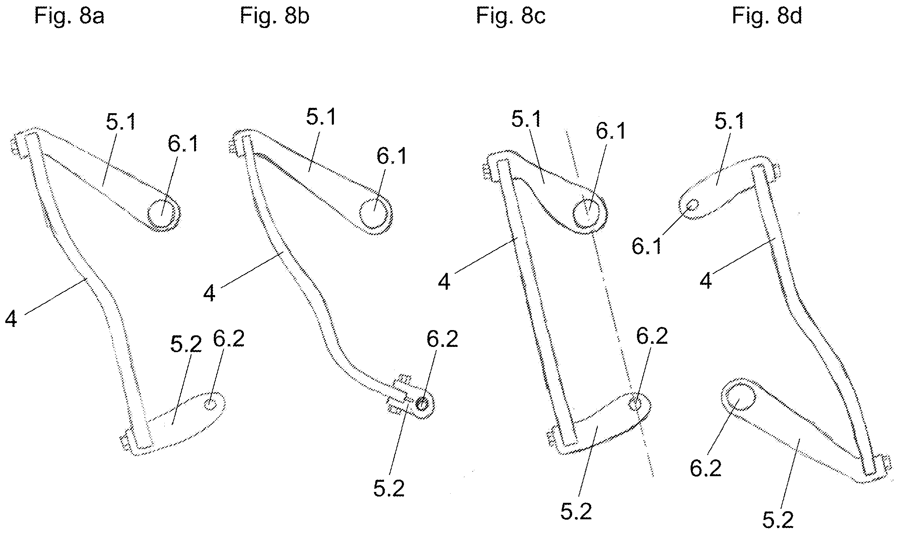

Fig. 8a bis 8d zeigen verschiedene Ausführungsformen von Blattfederanordnungen gemäß der Erfindung mit Blattfedern 4, ersten Hebeln 5.1 und zweiten Hebeln 5.2.

Dem ist zu entnehmen, dass die Federkraft über den Federweg entscheidend von der Ausgestaltung der ersten Hebel 5.1 und zweiten Hebel 5.2 abhängt. Gleichzeitig zeigt dies, dass gewünschte Federkinematiken mit der Erfindung leicht realisierbar sind.

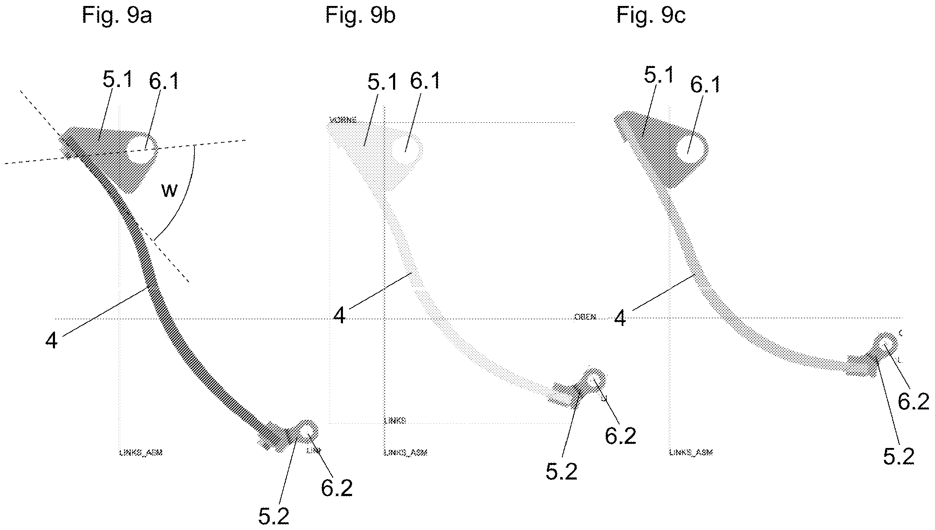

Weitere Ausführungsbeispiele sind in Fig. 9a bis 9c dargestellt. Wie an den zweiten Hebeln 5.2 in Fig. 9a bis 9c zu erkennen ist, müssen die Hebel nicht immer im spitzen Winkel zur Blattfeder stehen. Auch Hebel, welche die Drehachsen zur Blattfeder 4 (eigentlich: zur gedachten Fortsetzung der Blattfeder 4) quer versetzen, können im Rahmen der Erfindung ohne weiteres verwendet werden.

Fig. 9a bis 9c zeigen außerdem erste Hebel 5.1, die in etwa dreiecksförmig sind. Zu bemerken ist, dass bei solchen Ausführungsformen als Winkel w, den der jeweilige Hebel und die Blattfeder 4 einschließt, jener verstanden wird, der von den folgenden beiden Linien eingeschlossen wird (siehe Fig. 9a):
- Linie parallel zur Längsachse A der Blattfeder 4
- Linie vom Mittelpunkt der Drehachse bis zu einem Punkt, an dem die Blattfeder 4 aus einer Klemmung am ersten Hebel 5.1 hervortritt (d.h. nicht ganz bis zum Ende der Blattfeder 4)

Weitere Ausführungsformen sind denkbar. Beispielsweise könnte die Federanordnung aus Fig. 1 (oder allen anderen Ausführungsbeispielen) schlicht umgekehrt eingebaut werden, d.h. der erste Hebel 5.1 und das erste Drehlager 6.1 würden mit dem zweiten Hebel 5.2 und dem zweiten Drehlager 6.2 die Plätze tauschen und die Blattfeder würde an der Horizontalen gespiegelt eingebaut werden (kinematische Umkehr). Das erste Drehlager 6.1 könnte beispielsweise auch unmittelbar am Motor 16 befestigt sein.

Weitere Ausführungen zu den Vorteilen der Erfindung: Der erste Vorteil im Vergleich zu bekannten Lösungen (mit akzeptabel progressiver Federkraft) ist das verbesserte Packaging. Die Feder lässt sich einfacher ins Fahrzeuglayout integrieren und es kommt zu keinem Verlust an Bodenfreiheit. Voraussetzung für diese Positionierung im Fahrzeug ist dabei die vergleichsweise kurze Federlänge.

Bedingt durch die kleineren Abmaße kommt man zum nächsten Vorteil, dem geringeren Gewicht.

Ein weiterer sehr wichtiger Vorteil ist das Thema Robustheit, da es hier erwiesenermaßen bei der bekannten Lösung Probleme gab. Der Schutz vor den harten Steinschlägen von vorne erfolgt durch die versteckte Positionierung der Feder (geschützt vom Motorgehäuse). Die "normale" Verschmutzung durch Sand und kleinere Schmutzpartikel ist durch den Wegfall des Abrollkörpers kein Problem, da es an den beiden Einspannungen zu keiner Relativbewegung (zw. Feder und Klemmung) kommt. Im Vergleich dazu ist das bei den bekannten Lösungen sehr wohl ein Problem. Befindet sich an der Kontaktstelle (zwischen Feder und Abrollkörper) etwas Sand, dann reiben die Sandkörner bei jeder Ein- und Ausfederbewegung und führen schnell zu abrasivem Verschleiß.

Ein weiterer Vorteil in Bezug auf eine Serienanwendung ist die geringere Anfälligkeit für Fertigungstoleranzen am Rahmen. In der Praxis ist vor allem am Rahmen (bedingt durch die Schweißkonstruktion) mit einer gewissen Streuung zu rechnen. Durch den Wegfall des Auflagers und die drehbare Lagerung werden aber die Auswirkungen der Fertigungstoleranzen auf die resultierte Federkraft reduziert.

Der Vollständigkeit halber ist auch das Thema der Krafteinleitung bzw. Kraftwirkrichtung anzusprechen. Die Erfahrung zeigt, dass der Kraftfluss (wie die auftretenden Kräfte von den Rändern über die Schnittstellen wie Fußraster, Lenker und Sitzbank auf den Fahrer wirken) einen Einfluss auf das subjektive Fahrgefühl hat. Durch die veränderte Krafteinleitung ist hier eine Verbesserung des Fahrgefühls zu erwarten.

Die Erfindung bietet auch einen wirtschaftlichen Vorteil, sodass Blattfederkonzepte tatsächlich in Serienmaschinen eingesetzt werden können. Die Erfindung wurde bewusst sehr einfach gehalten, das heißt, es werden insgesamt weniger und einfachere Bauteile verwendet. Ganz pauschal bewertet, führen weniger Bauteile zu geringeren Bauteilkosten und auch weniger Assemblierungsaufwand, was wiederum zu einem günstigeren Produkt führt. Entfernt man sich vom Komplettsystem und betrachtet nur die Blattfeder 4 an sich, dann ergibt sich auch hier ein wirtschaftlicher Vorteil. Die Blattfeder 4 gemäß der Erfindung baut deutlich kleiner und somit ist auch weniger Material notwendig.

Zusätzlich kann auch noch auf ein fertigungsgerechtes Design Wert gelegt werden. Gemäß der Erfindung kann die Blattfeder 4 aufgrund des relativ konstanten Biegemomentverlaufs eine recht gleichbleibende Wandstärke aufweisen und kann damit auch viele durchgehende Gewebelagen beinhalten. Im Vergleich dazu hat die Blattfeder 4 bei den bekannten Lösungen in der Mitte einen deutlich stärkeren Querschnitt und das wird dadurch erzielt, dass in der Mitte zusätzliche kurze Gewebelagen miteingelegt werden müssen und der Lagenaufbau symbolisch wie eine Pyramide aussieht. Analog zur Schlussfolgerung bei der Bauteilanzahl, bedeuten auch hier weniger Lagen weniger Fertigungsaufwand und damit geringere Fertigungskosten der Blattfeder 4.

## Patentansprüche

1. Einspuriges Fahrzeug, insbesondere Motorrad, mit
- einem Rahmen (2),
- einer relativ zum Rahmen (2) rotierbaren Schwinge (3) sowie
- einer Blattfeder (4), welche zum Erzielen einer Federwirkung zwischen der Schwinge (3) und dem Rahmen (2) mit dem Rahmen (2) einerseits und der Schwinge (3) andererseits verbunden ist,
wobei
- die Blattfeder (4) über einen ersten Hebel (5.1) und ein erstes Drehlager (6.1) mit dem Rahmen (2) verbunden ist, sodass eine erste Drehachse des ersten Drehlagers (6.1) aufgrund des ersten Hebels (5.1) zur Blattfeder (4) quer versetzt ist, und/oder
- die Blattfeder (4) über einen zweiten Hebel (5.2) und ein zweites Drehlager (6.2) mit der Schwinge (3) verbunden ist, sodass eine zweite Drehachse des zweiten Drehlagers (6.2) aufgrund des zweiten Hebels (5.2) zur Blattfeder (4) quer versetzt ist,
**dadurch gekennzeichnet, dass** die Blattfeder (4) ausschließlich über zwei Verbindungen, insbesondere dem ersten Hebel (5.1) und dem zweiten Hebel (5.2), mit dem Rest des Motorrads (1) in Kontakt steht.

2. Einspuriges Fahrzeug nach Anspruch 1, **dadurch gekennzeichnet, dass** das erste Drehlager (6.1) unmittelbar am Rahmen (2) angeordnet ist und/oder dass das zweite Drehlager (6.2) unmittelbar an der Schwinge (3) angeordnet ist.

3. Einspuriges Fahrzeug nach einem der vorhergehenden Ansprüche, **dadurch gekennzeichnet, dass** der erste Hebel (5.1) mit der Blattfeder (4) einen rechten oder spitzen Winkel einschließt und/oder dass der zweite Hebel (5.2) mit der Blattfeder (4) einen rechten oder spitzen Winkel einschließt.

4. Einspuriges Fahrzeug nach einem der vorhergehenden Ansprüche, **dadurch gekennzeichnet, dass** der erste Hebel (5.1) und/oder der zweite Hebel (5.2) zum Einstellen einer Federvorspannung und/oder einer Federhärte der Blattfeder (4) in der Länge verstellbar ist.

5. Einspuriges Fahrzeug nach einem der vorhergehenden Ansprüche, **dadurch gekennzeichnet, dass** die Blattfeder (4) als flacher Körper mit einem ersten Ende (7) und einem zweiten Ende (8) ausgebildet ist, wobei die Blattfeder (4) vorzugsweise so angeordnet ist, dass sich das erste Ende (7) und das zweite Ende (8) der Blattfeder (4) beim Einfedern in Bezug auf die Fahrtrichtung nach hinten biegen.

6. Einspuriges Fahrzeug nach Anspruch 5, **dadurch gekennzeichnet, dass** das erste Ende (7) der Blattfeder im ersten Hebel (5.1) lagefest eingespannt ist und/oder das zweite Ende (8) der Blattfeder (4) im zweiten Hebel (5.2) lagefest eingespannt ist.

7. Einspuriges Fahrzeug nach einem der vorhergehenden Ansprüche, **dadurch gekennzeichnet, dass** die Blattfeder (4) eine erste Krümmung (9.1) und/oder eine zweite Krümmung (9.2) aufweist.

8. Einspuriges Fahrzeug nach Anspruch 7, **dadurch gekennzeichnet, dass** durch die erste Krümmung (9.1) und durch die zweite Krümmung (9.2) eine S-Form entsteht, wobei die zweite Krümmung (9.2) vorzugsweise stärker ausgeprägt ist als die erste Krümmung (9.1).

9. Einspuriges Fahrzeug nach einem der vorhergehenden Ansprüche, **dadurch gekennzeichnet, dass** die Blattfeder (4) als faserverstärkter Kunststoff hergestellt ist, wobei zur Herstellung der Blattfeder (4) eine Vielzahl an gestapelten Faserverstärkungslagen unterschiedlicher Länge mit dem Kunststoff oder Vorläufern des Kunststoffs geflutet werden.

10. Einspuriges Fahrzeug nach einem der vorhergehenden Ansprüche, **dadurch gekennzeichnet, dass** sich in Bezug auf die Längsachse (A) der Blattfeder folgende Bereiche ergeben:
- ein erster Bereich (11) konstanter Dicke der Blattfeder (4),
- ein sich an den ersten Bereich (11) anschließender zweiter Bereich (12) veränderlicher Dicke der Blattfeder (4) und
- ein sich an den zweiten Bereich (12) anschließender dritter Bereich (13) konstanter Dicke der Blattfeder (4).

11. Einspuriges Fahrzeug nach einem der vorhergehenden Ansprüche, **dadurch gekennzeichnet, dass** das erste Drehlager (6.1) und das zweite Drehlager (6.2) im Wesentlichen übereinander angeordnet sind.

12. Einspuriges Fahrzeug nach einem der vorhergehenden Ansprüche, **dadurch gekennzeichnet, dass** eine Verbindung der Blattfeder (4) mit der Schwinge (3), insbesondere das zweite Drehlager (6.2), zwischen einem Hauptdrehgelenk (14), welches die Schwinge (3) mit dem Rahmen (2) verbindet, und einer Radachse (15) angeordnet ist, wobei die Verbindung der Blattfeder (4) mit der Schwinge (3) vorzugsweise näher am Hauptdrehgelenk (14) als an der Radachse (15) angeordnet ist.

13. Verwendung einer Blattfeder (4) bei einem einspurigen Fahrzeug (1) nach einem der vorhergehenden Ansprüche.

## Claims

1. Single-track vehicle, in particular motorcycle, with
- a frame (2),
- a swingarm (3) rotatable relative to the frame (2), and
- a leaf spring (4), which is connected to the frame (2) on the one hand and the swingarm (3) on the other to achieve a spring effect between the swingarm (3) and the frame (2),
wherein
- the leaf spring (4) is connected to the frame (2) via a first lever (5.1) and a first pivot bearing (6.1), with the result that a first pivot of the first pivot bearing (6.1) is transversely offset relative to the leaf spring (4) by virtue of the first lever (5.1), and/or
- the leaf spring (4) is connected to the swingarm (3) via a second lever (5.2) and a second pivot bearing (6.2), with the result that a second pivot of the second pivot bearing (6.2) is transversely offset relative to the leaf spring (4) by virtue of the second lever (5.2),
**characterized in that** the leaf spring (4) is in contact with the rest of the motorcycle (1) exclusively via two connections, in particular the first lever (5.1) and the second lever (5.2).

2. Single-track vehicle according to claim 1, **characterized in that** the first pivot bearing (6.1) is arranged directly on the frame (2) and/or **in that** the second pivot bearing (6.2) is arranged directly on the swingarm (3).

3. Single-track vehicle according to one of the preceding claims, **characterized in that** the first lever (5.1) encloses a right or acute angle with the leaf spring (4) and/or **in that** the second lever (5.2) encloses a right or acute angle with the leaf spring (4).

4. Single-track vehicle according to one of the preceding claims, **characterized in that** the first lever (5.1) and/or the second lever (5.2) for setting a spring preload and/or a spring stiffness of the leaf spring (4) is length-adjustable.

5. Single-track vehicle according to one of the preceding claims, **characterized in that** the leaf spring (4) is formed as a flat body with a first end (7) and a second end (8), wherein the leaf spring (4) is preferably arranged such that the first end (7) and the second end (8) of the leaf spring (4) bend backwards with respect to the direction of travel when deflected.

6. Single-track vehicle according to claim 5, **characterized in that** the first end (7) of the leaf spring is clamped in the first lever (5.1) in a positionally fixed manner and/or the second end (8) of the leaf spring (4) is clamped in the second lever (5.2) in a positionally fixed manner.

7. Single-track vehicle according to one of the preceding claims, **characterized in that** the leaf spring (4) has a first curvature (9.1) and/or a second curvature (9.2).

8. Single-track vehicle according to claim 7, **characterized in that** the first curvature (9.1) and the second curvature (9.2) form an S shape, wherein the second curvature (9.2) is preferably more pronounced than the first curvature (9.1).

9. Single-track vehicle according to one of the preceding claims, **characterized in that** the leaf spring (4) is produced as a fiber-reinforced plastic, wherein to produce the leaf spring (4) a plurality of stacked fiber reinforcement plies of different lengths are flooded with the plastic or precursors of the plastic.

10. Single-track vehicle according to one of the preceding claims, **characterized in that** the following areas result with respect to the longitudinal axis (A) of the leaf spring:
- a first area (11) of constant thickness of the leaf spring (4),
- a second area (12) of varying thickness of the leaf spring (4) adjoining the first area (11), and
- a third area (13) of constant thickness of the leaf spring (4) adjoining the second area (12).

11. Single-track vehicle according to one of the preceding claims, **characterized in that** the first pivot bearing (6.1) and the second pivot bearing (6.2) are arranged substantially one above the other.

12. Single-track vehicle according to one of the preceding claims, **characterized in that** a connection of the leaf spring (4) to the swingarm (3), in particular the second pivot bearing (6.2), is arranged between a main pivot joint (14), which connects the swingarm (3) to the frame (2), and a wheel axle (15), wherein the connection of the leaf spring (4) to the swingarm (3) is preferably arranged closer to the main pivot joint (14) than to the wheel axle (15).

13. Use of a leaf spring (4) in a single-track
vehicle (1) according to one of the preceding claims.

## Revendications

1. Véhicule à deux roues placées l'une derrière l'autre, en particulier motocyclette, avec
- un cadre (2),
- un bras oscillant (3) rotatif par rapport au cadre (2), ainsi que
- un ressort à lames (4) qui, pour obtenir un effet de ressort entre le bras oscillant (3) et le cadre (2), est relié au cadre (2) d'une part et au bras oscillant (3) d'autre part,
dans lequel
- le ressort à lames (4) est relié au cadre (2) par un premier levier (5.1) et un premier palier rotatif (6.1), de sorte qu'un premier axe de rotation du premier palier rotatif (6.1) est décalé transversalement par rapport au ressort à lames (4) en raison du premier levier (5.1), et/ou
- le ressort à lames (4) est relié au bras oscillant (3) par un second levier (5.2) et un second palier rotatif (6.2), de sorte qu'un second axe de rotation du second palier rotatif (6.2) est décalé transversalement par rapport au ressort à lames (4) en raison du second levier (5.2),
**caractérisé en ce que** le ressort à lames (4) est en contact avec le reste de la motocyclette (1) exclusivement par deux liaisons, en particulier le premier levier (5.1) et le second levier (5.2).

2. Véhicule à deux roues placées l'une derrière l'autre selon la revendication 1, **caractérisé en ce que** le premier palier rotatif (6.1) est disposé directement sur le cadre (2) et/ou que le second palier rotatif (6.2) est disposé directement sur le bras oscillant (3).

3. Véhicule à deux roues placées l'une derrière l'autre selon l'une quelconque des revendications précédentes, **caractérisé en ce que** le premier levier (5.1) forme un angle droit ou aigu avec le ressort à lames (4) et/ou que le second levier (5.2) forme un angle droit ou aigu avec le ressort à lames (4).

4. Véhicule à deux roues placées l'une derrière l'autre selon l'une quelconque des revendications précédentes, **caractérisé en ce que** le premier levier (5.1) et/ou le second levier (5.2) est réglable en longueur pour ajuster une précontrainte de ressort et/ou une dureté de ressort du ressort à lames (4).

5. Véhicule à deux roues placées l'une derrière l'autre selon l'une quelconque des revendications précédentes, **caractérisé en ce que** le ressort à lames (4) est réalisé en tant que corps plat avec une première extrémité (7) et une seconde extrémité (8), dans lequel le ressort à lames (4) est de préférence disposé de sorte que la première extrémité (7) et la seconde extrémité (8) du ressort à lames (4) se courbent vers l'arrière lors de la compression par rapport au sens de marche.

6. Véhicule à deux roues placées l'une derrière l'autre selon la revendication 5, **caractérisé en ce que** la première extrémité (7) du ressort à lames est serrée de manière fixe en position dans le premier levier (5.1) et/ou la seconde extrémité (8) du ressort à lames (4) est serrée de manière fixe en position dans le second levier (5.2).

7. Véhicule à deux roues placées l'une derrière l'autre selon l'une quelconque des revendications précédentes, **caractérisé en ce que** le ressort à lames (4) présente une première courbure (9.1) et/ou une seconde courbure (9.2).

8. Véhicule à deux roues placées l'une derrière l'autre selon la revendication 7, **caractérisé en ce qu'**une forme en S est obtenue par la première courbure (9.1) et par la seconde courbure (9.2), dans lequel la seconde courbure (9.2) est de préférence plus marquée que la première courbure (9.1).

9. Véhicule à deux roues placées l'une derrière l'autre selon l'une quelconque des revendications précédentes, **caractérisé en ce que** le ressort à lames (4) est fabriqué en plastique renforcé de fibres, dans lequel, pour la fabrication du ressort à lames (4), une pluralité de couches de renfort de fibres empilées de longueurs différentes sont inondées avec le plastique ou des précurseurs du plastique.

10. Véhicule à deux roues placées l'une derrière l'autre selon l'une quelconque des revendications précédentes, **caractérisé en ce que**, par rapport à l'axe longitudinal (A) du ressort à lames, les zones suivantes sont obtenues :
- une première zone (11) d'épaisseur constante du ressort à lames (4),
- une deuxième zone (12) d'épaisseur variable du ressort à lames (4) suivant la première zone (11) et
- une troisième zone (13) d'épaisseur constante du ressort à lames (4) suivant la deuxième zone (12).

11. Véhicule à deux roues placées l'une derrière l'autre selon l'une quelconque des revendications précédentes, **caractérisé en ce que** le premier palier rotatif (6.1) et le second palier rotatif (6.2) sont disposés sensiblement l'un au-dessus de l'autre.

12. Véhicule à deux roues placées l'une derrière l'autre selon l'une quelconque des revendications précédentes, **caractérisé en ce qu'**une liaison du ressort à lames (4) avec le bras oscillant (3), en particulier le second palier rotatif (6.2), est disposée entre une articulation rotative principale (14), qui relie le bras oscillant (3) au cadre (2), et un essieu (15), dans lequel la liaison du ressort à lames (4) avec le bras oscillant (3) est de préférence disposée plus près de l'articulation rotative principale (14) que de l'essieu (15).

13. Utilisation d'un ressort à lames (4) pour un véhicule à deux roues placées l'une derrière l'autre (1) selon l'une quelconque des revendications précédentes.
